# EUROPÄISCHE PATENTSCHRIFT

(11) **EP 2 428 474 B1**
(45) Veröffentlichungstag und Bekanntmachung des Hinweises auf die Patenterteilung: **17.12.2014**
(21) Anmeldenummer: 11009215.2
(22) Anmeldetag: 10.02.2004
(51) Int. Cl.: B65G 69/00

(54) **Verfahren zum Betrieb eines Anfahrschutzes**
Method for operating a crash protection device
Procédé destiné au fonctionnement d'un dispositif de protection contre les chocs

(30) Priorität: 10.02.2003 DE 10305565; 24.03.2003 DE 10313268
(43) Veröffentlichungstag der Anmeldung: 14.03.2012
(62) Teilanmeldung aus: 04709607.8
(73) Patentinhaber: Grunewald, Niclas, 21271 Hanstedt (DE)
(72) Erfinder: Grunewald, Niclas, 21271 Hanstedt (DE)
(74) Vertreter: Vonnemann, Gerhard

(56) Entgegenhaltungen:
- WO-A-01/81215
- WO-A1-02/070382
- US-A- 4 750 299
- US-A- 5 881 414

## Beschreibung

Die Erfindung betrifft ein Verfahren zum Betrieb eines Anfahrschutzes, bestehend aus einem ortsfestem Montagerahmen und einem höhenverstellbaren Pufferblock für eine Verladerampe oder eine Überladebrücke, insbesondere zum Schutz von Fassaden beim Andocken von Fahrzeugen an Gebäudeöffnungen, mit mindestens einem Dichtungsteil.

Die Beladung von LKW erfolgt an Lagerhäusern fast ausschliesslich an Verladerampen, die in etwa die Höhe der Fahrzeugladefläche haben sollten. Auch sind Überladebrücken bekannt, die eine Anpassung zwischen dem Niveau der Verladerampe und dem sich mit dem Ladezustand ändernden Niveau einer Fahrzeugladefläche ermöglichen.

Aus der WO 01/81215 A1 ist ein Verfahren zum Andocken eines LKW an einer Ladeandockplattform bekannt mit den Schritten:
Positionieren eines Stoßfängers in einer Betriebsposition oberhalb der Ladeandockplattform, wo eine Anlagefläche des Stoßfängers von dem LKW zur Anlage gebracht werden kann, und anschließendes Bewegen des Stoßfängers von der Betriebsposition in eine von dem LKW beabstandete Position und ferner Bewegen des Stoßfängers in eine Aufbewahrungsposition unterhalb der Betriebsposition, und wobei der Stoßfänger um einen mit dem Rahmen verbundene Achse derart drehbar ist, dass sich der Stoßfänger um eine im Wesentlichen horizontale Achse während der Bewegung von der Betriebsposition in die beabstandete Position schwenkt. Das Positionieren des Stoßfängers in die Betriebsposition oberhalb der Ladeandockplattform kann mittels kraftbetätigter Antriebe erfolgen, die mittels eines Fußes oder händisch Betätigen sonstiger Schalter in Gang gesetzt werden.

Es kommt aber auch vor, dass die Ladefläche andockender LKW niedriger als die Höhe der Rampenkante ist. In solchen Fällen sollten auch Fahrzeug und Gebäude vor Schäden beim Andocken geschützt werden können.

Eine besondere Problematik stellt sich, wenn zur Montage eines Anfahrpuffers aus besonderen Gründen, z. B. bei temperaturgeführten Logistikketten, wie an Kühlhäusern, keine Gebäudewand zur Verfügung steht. Derartige Vorrichtungen zum Dichten des Spalts zwischen dem Rand einer Gebäudeöffnung und dem Heck eines herangefahrenen Fahrzeuges sind beispielsweise aus der DE 33 42 732 A 1, der DE 37 10 528 A 1, der DE 30 49 358 C 2, der DT 25 55 201 A 1, der DE 199 06 486 C 1 bekannt. Allen diesen Vorrichtungen ist gemeinsam, dass sie den Spalt zwischen der Gebäudeöffnung und einem an diese Gebäudeöffnung herangefahrenen Fahrzeuge lediglich seitlich und oben dichten. Unten wird der Spalt zwischen der Gebäudeöffnung und dem Fahrzeug durch eine Überladebrücke teilweise verschlossen, deren Plattform auf die Ladefläche eines Fahrzeugs aufgelegt wird, um das Fahrzeug zu be-oder entladen.

Nachteilig an diesen bekannten Konzepten ist, dass zwischen den seitlichen Dichtungen und der Überladebrücke Öffnungen bleiben, durch die ein Luftaustausch zwischen der Aussenluft und dem Inneren der Verladestation stattfinden kann. Aufgrund der notwendigen Lagetoleranzen eines an die Gebäudeöffnung heranfahrenden Fahrzeugs müssen die Überladebrücken in ihrer Breite stets schmaler sein als die Ladefläche des Fahrzeugs. Die genannten Öffnungen sind also systembedingt notwendig. Insbesondere bei Logistikketten, die beispielsweise tiefgefrorene Ware bei einer bestimmten Temperatur oder ein bestimmtes Klima für das Transportgut aufrecht erhalten müssen, werden diese Öffnungen als nachteilig empfunden. Ausserdem kann es beispielsweise bei Kühlhäusern zum Befrieren der Überladebrücken kommen, weil die eintretende Warmluft vorhandene Feuchtigkeit an der Oberfläche der Überladebrücke kondensiert. Der so entstehende Tau kann auch gefrieren, was die Arbeitssicherheit gefährdet. Für derartige Situationen sind durch GM 7425832.5 oder DE 2306130 beispielsweise Dichtungen bekannt, die den Spalt zwischen Gebäudeöffnung und einem angedockten Fahrzeug oben und seitlich schliessen. Zusätzlich ist aus der US 4,293, 969 eine aufblasbare Dichtung bekannt, die zwischen einem Plateau einer Überladebrücke und der Sohle der Einbaugrube abdichtet.

Nachteilig an den bekannten Lösungen ist, dass immer seitlich des Fahrzeughecks und der Überladebrücke unten eine ungedichtete Öffnung verbleibt.

Es besteht jedoch das dringende Bedürfnis, den gesamten Verladevorgang auch bei unterschiedlichen Bausituationen zu automatisieren und die Sicherheit innen wie aussen weiter zu verbessern.

Diese Aufgabe wird durch ein Verfahren zum Betrieb eines Anfahrschutzes mit den Merkmalen des Patentanspruchs 1 gelöst.

Weitere vorteilhafte Ausgestaltungen des Verfahrens sind in dem Unteranspruch 2 beschrieben.

Dadurch, dass das Startsignal für das untere Dichtelement zum Anfahren der Dichtposition von der Steuerung erzeugt wird, vorzugsweise der Überladebrückensteuerung, erst wenn die Betriebsposition der Überladebrücke erreicht ist, insbesondere nach Ablauf einer Zeitspanne, läuft das Abdichten des Spaltes zwischen der Gebäudeöffnung und dem Fahrzeug weitgehend automatisch ab. Dies lässt sich dadurch verwirklichen, dass nach Erteilen des Absenkungsbefehls der Steuerung die Steuerung selbsttätig nach Ablauf einer voreingestellten Zeit das Signal zum Aufblasen erteilt.

Auch das Ausserbetriebsetzen des Dichtungsteils erfolgt vorteilhafterweise weitgehend automatisch, wenn das Signal zum Rückfahren des unteren Dichtungsteils in die Ruhelage von der Überladebrückensteuerung erzeugt wird. Der Befehl wird beispielsweise von der Steuerung erteilt, sobald eine voreingestellte Zeit seit Betätigen eines "Heben"-Tasters abgelaufen ist.

Dieser Vorgang lässt sich noch zeitlich dadurch verkürzen, dass das Rückfahren des Dichtungsteils in die Ruhelage durch Umkehrung eines Gebläses erfolgt. Während des Betriebes verändert sich der Ladezustand des herangefahrenen Fahrzeuges. Aus diesem Grunde verändert sich das Niveau der Ladefläche. Das aufblasbare Dichtungsteil kann dieser Bewegung des Fahrzeugs aufgrund seiner eigenen Elastizität folgen und behält dadurch den Kontakt zum Fahrzeug. Anders liegt der

Fall, wenn, beispielsweise aus Sicherheitsgründen, ein mechanisch stabiles Rollo als Dichtungsteil eingesetzt wird. Damit das Rollo keinen Schaden nimmt und trotzdem den Kontakt zum Fahrzeug beibehält, ist mit Vorteil vorgesehen, dass eine selbsttätige Lageregelung vorgesehen ist, die die Lage des Dichtungsteils an die sich verändernde Lage der Überladebrücke selbsttätig anpasst.

Der Anfahrschutz ist als im wesentlichen horizontaler Rammbalken mit mindestens einem Anfahrkissen ausgebildet, der im Bereich seiner Enden an zwei beabstandeten, vorzugsweise als Säulen ausgebildeten, Montagerahmen höhenverstellbar gelagert ist. Der Rammbalken überspannt dabei vorzugsweise die gesamte Gebäudeöffnung. Er kann beispielsweise mehr als die doppelte Breite einer Überladebrücke aufweisen. Vorteilhafterweise dient der Rammbalken in seiner Ruheposition oberhalb einer Brückenplatte der Überladebrücke gleichzeitig als Absturzsicherung für auf der Brückenplatte befindliche Ladegeräte wie Gabelstapler, so dass die Betriebssicherheit innerhalb des Gebäudes erhöht wird. Dadurch, dass mindestens ein Anfahrkissen auf einem im wesentlichen horizontalen Rammbalken angeordnet ist, der an einem Montagerahmen höhenverstellbar gelagert ist, ist die Betriebssicherheit auch in denjenigen Fällen gewährleistet, wo die Brückenplatte die gesamte Breite eines Lastkraftwagens überspannt und die bekannten Anfahrpuffer wirkungslos sind. In diesen Fällen werden der LKW und seine Rücklichter vor Schäden geschützt. Der Rammbalken schützt somit nicht nur innen, sondern auch aussen die Überladebrücke das Gebäude und die anfahrenden Fahrzeuge vor Beschädigungen. Dies gilt insbesondere, wenn auch der Rammbalken einen Verstellweg aufweist, der sowohl eine horizontale als auch eine vertikale Stellwegkomponente aufweist. Die horizontale Stellwegkomponente dient zum Entlasten des Anfahrpuffers. Die vertikale Stellwegkomponente erlaubt die Höhenverstellung. Insbesondere die Ausgestaltung, dass der aufwärts gerichtete Verstellweg auf mindestens einem Teil des Weges einen grösseren Abstand zur Montageebene aufweist, als der abwärts gerichtete Verstellweg, ermöglicht eine eindeutige Schaltfolge der

Verfahrwege den Antriebselementen zuzuordnen. Beim Hochfahren wird dann erst die horizontale nach aussen gerichtete Stellwegkomponente durchfahren bevor die vertikale Verstellung erfolgt. Beim Runterfahren wird ebenfalls zuerst die horizontale aber nach innen gerichtete Stellwegkomponente durchfahren und dadurch ggf. der Pufferblock entlastet, bevor der Rammbalken nach unten in seine untere Endlage bewegt wird. In der unteren Lage des Rammbalkens besteht deshalb kein Kontakt zum Fahrzeug.

Die Massnahme, dass der Montagerahmen feststehend ausgebildet ist und eine Führungsschablone aufweist, an der sich zwei vertikal beanstandete veränderbare Stützflächen einer lageveränderlichen Baugruppe abstützen, erlaubt eine vorteilhafte direkte Einleitung auftretender Stosskräfte in den Baukörper und eine besonders robuste Ausführung, insbesondere wenn die lageveränderliche Baugruppe aus dem Anfahrpuffer und einem Teil des Linearantriebs gebildet ist, und wobei vorzugsweise eine Stützfläche oder beide am Pufferblock angeordnet sind, werden die auftretenden Pufferkräfte über diese definierten Stützflächen, die entsprechend gross und vorzugsweise eben ausgebildet sind, in den Montagerahmen eingeleitet. Der Stellantrieb bleibt vorteilhaft verschont von diesen Kräften.

Die Funktionssicherheit wird noch dadurch erhöht, dass der Pufferblock eine Mitnahmeöffnung aufweist, die in vertikaler Richtung grösser als in horizontaler Richtung ausgebildet ist und in der ein Mitnahmeelement eingreifend angeordnet ist, das eine Verbindung zum beweglichen Teil des Stellantriebs aufweist. Die Entlastung des Puffers wird dadurch erleichtert. Der Pufferblock kann vorteilhaft weit über die obere Rampenkante hinausragen, weil eine Stützfläche als Drehmomentsstütze einer auf den Pufferblock ausgeübten Anfahrkraft ausgebildet ist. Es entsteht nämlich durch die Anfahrkräfte dadurch, dass der Pufferblock eine Stossfläche aufweist, deren Mitteachse oberhalb der Mitnahmeöffnung angeordnet ist, ein Moment um eine horizontale Achse, das auf diese konstruktiv günstige Weise in den Baukörper über den Montagerahmen eingeleitet wird.

Wenn der Antrieb des Anfahrpuffers eine Wirkverbindung zu einer Steuerung aufweist, der das Signal eines Sensor zur Erkennung eines herangefahrenen Fahrzeugs aufgeschaltet ist, kann die Bedienung des Puffers vorteilhaft automatisiert werden. Die Steuerung fährt den Anfahrpuffer aus dem störenden Bereich heraus, sobald der Sensor die Anwesenheit eines Fahrzeugs signalisiert und beispielsweise zusätzlich eine Zeitspanne abgelaufen ist. Sobald der LKW dann seine Andockposition verlassen hat, wird der Rammbalken automatisch in seine obere Sicherheitsposition gefahren.

Die Anfahrpuffer lassen sich auch vorteilhaft aus dem Schwenkbereich der LKW-Hintertür bewegen, wenn der Abstand der Säulen grösser als der Abstand der Anfahrkissen ist, vorzugsweise grösser als die doppelte Breite eines LKW.

Die auftretenden Anfahrkräfte lassen sich mit Vorteil unabhängig von einem Gebäudefundament dadurch ableiten, dass die Säulen an ihrem unteren Ende auf der Verkehrsfläche befestigt sind. Zusätzliche strukturelle Stabilität wird erreicht, wenn die Säulen im Bereich ihres oberen Endes durch einen Stützbalken nach hinten abgestützt ausgebildet sind, der seinerseits vorzugsweise auf der Verkehrsfläche und/oder an einem Gebäudefundament befestigt ist.

In Ausgestaltung der Erfindung ist vorgesehen, dass der Rammbalken ein Dichtungsteil, vorzugsweise verstellbares, insbesondere aufblasbares, aufweist, wobei das Dichtungsteil einen Spalt zwischen dem Rammbalken und der Überladebrücke überbrückend ausgebildet ist. Auf diese Weise wird beim Be-oder Entladen in Fällen einer temperaturempfindlichen

Logistikkette ein sicherer Abschluss gegenüber der Aussenluft erreicht, so dass keine Luftfeuchtigkeit auf der Überladebrücke kondensieren oder ausfrieren und damit den sicheren Einsatz von beispielsweise Gabelstaplern oder Niederflurhubwagen gefährden kann. Einfach und robust lässt sich das Dichtungsteil gestalten, wenn das Dichtungsteil aufblasbar ausgebildet ist. Ein solches Dichtungsteil passt sich mit Vorteil auch an Anbauten eines Fahrzeuges an, so dass es besonders gut dichtet und das Fahrzeug nicht beschädigt. Durch die Aufblasbarkeit kann sich das Dichtungsteil hervorragend an betriebs-und fahrzeugbedingte unterschiedliche Abstände zwischen Rammbalken und Fahrzeug/Überladebrücke anpassen, wobei zusätzliche mechanische Antriebe nicht erforderlich sind, da das Dichtungsmaterial durch die einströmende Luft in die dem Zuschnitt entsprechende Form gedrückt wird. Das Dichtungsteil überspannt dabei mit Vorteil noch die Breite der Überladebrücke, so dass es die sich seitlich der Überladebrücke vorhandenen Öffnungen zu einer dreiseitigen Dichtung der Gebäudeöffnung schliesst.

Diese Abdichtwirkung wird noch dadurch verbessert, dass das Dichtungsteil in der Aufsicht U-förmig ausgebildet ist und/oder vorzugsweise mit seinen freien Schenkeln in Richtung der Anfahrkissen- also zum LKW-zeigend ausgebildet ist. Das Dichtungsteil schmiegt sich so noch besser an ein Fahrzeug an. Auch dadurch, dass das Dichtungsteil breiter als die Überladebrücke ausgebildet ist, dichtet sie auch über die seitlichen Kanten der Überladebrücke hinaus.

Besonders vorteilhaft ist, wenn das Dichtungsteil breiter als die in der Gebäudeöffnung vorgesehene Überladebrücke ausgebildet ist. Dann werden die vorhandenen Spalte rechts und links der Ladebrücke geschlossen. Das Dichtungsteil überspannt bevorzugt die gesamte Breite der Gebäudeöffnung. Das Dichtungsteil kann dabei als ein in der Höhe motorisch verstellbares Scherenelement und/oder ein Rollo aus aneinandergereihten Lamellen ausgestaltet sein. Ein Einsteigen in den Innenraum der Ladebucht wird durch das feste Rollo aus aneinandergereihten Lamellen wesentlich erschwert.

Einfach und robust aber lässt sich das Dichtungsteil gestalten, wenn das Dichtungsteil aufblasbar ausgebildet ist. Ein solches Dichtungsteil passt sich mit Vorteil auch an Anbauten des Fahrzeugs an, so dass es besonders gut dichtet, Es beschädigt das Fahrzeug nicht und weist einen geringen Wärmedurchlass auf.

Mit Vorteil können auch bereits vorhandene Gebläse für das erfindungsgemässe Dichtungsteil genutzt werden, wenn weitere Dichtungsteile, vorzugsweise aufblasbare Dichtungsteile, um die Gebäudeöffnung angeordnet sind, so dass die Gebäudeöffnung allseitig umschlossen ist.

In Ausgestaltung der Erfindung ist zur Versorgung des Dichtungsteils mit Luft vorgesehen, dass das Dichtungsteil ein Luftgebläse mit einer Luftversorgungsleitung für das Dichtungsteil aufweist, wobei das Gebläse insbesondere reversierbar ausgebildet ist. Dadurch, dass das Gebläse reversierbar ausgebildet ist, kann die Luft auch schnell wieder aus der Dichtung entfernt werden und das Fahrzeug die Ladeöffnung verlassen.

Die Inbetriebnahme der Dichtung kann vorteilhaft automatisiert werden, wenn das Gebläse über eine Wirkverbindung mit einer Steuerung der Überladebrücke verbunden ist, wobei die Steuerung die Anwesenheit eines LKW detektierend ausgebildet ist. Beispielsweise wird von der Steuerung das Gebläse dann in Betrieb gesetzt, wenn die Oberladebrücke auf die Ladefläche des herangefahrenen LKW abgesenkt ist. Sobald dann die Überladebrücke den Befehl zur Rückkehr in die Ruhelage erhält, kann gleichzeitig oder vorher auch das Gebläse ausgeschaltet werden, so dass die Dichtung aufgrund der durch die Auslassöffnungen weiter ausströmende Luft in sich zusammenfällt. Diese Zeit kann, falls gewünscht, weiter verkürzt werden, wenn das Gebläse kurze Zeit reversiert betrieben wird. Die Dichtung bläst sich demnach erst auf, wenn das Fahrzeug sich bereits in seiner Parkposition befindet und die Überladebrücke auf die Ladefläche aufgelegt ist.

Die Erfindung wird in einer bevorzugten Ausführungsform unter Bezugnahme auf eine Zeichnung beschrieben, wobei weitere vorteilhafte Einzelheiten den Figuren der Zeichnung zu entnehmen sind.

Funktionsmässig gleiche Teile sind dabei mit denselben Bezugszeichen versehen.

Die Figuren der Zeichnung zeigen im einzelnen: Figur 1 eine Seitenansicht des erfindungsgemässen Anfahrschutzes in der Anfahrsituation durch einen LKW, Figur 2 eine Seitenansicht des erfindungsgemässen Anfahrpuffers in der Verladesituation des LKW, Figur 3 eine schematische Schnittdarstellung einer Seitenansicht des erfindungsgemässen Anfahrschutzes in der Betriebsposition, Figur 4 eine schematische Schnittdarstellung einer Seitenansicht des erfindungsgemässen Anfahrschutzes in der Anfahrsituation für einen LKW, Figur 5 eine schematische Darstellung des Verstellweges des erfindungsgemässen Anfahrschutzes, Figur 6 eine schematische Darstellung einer Aufsichtsicht des erfindungsgemässen Anfahrpuffers,

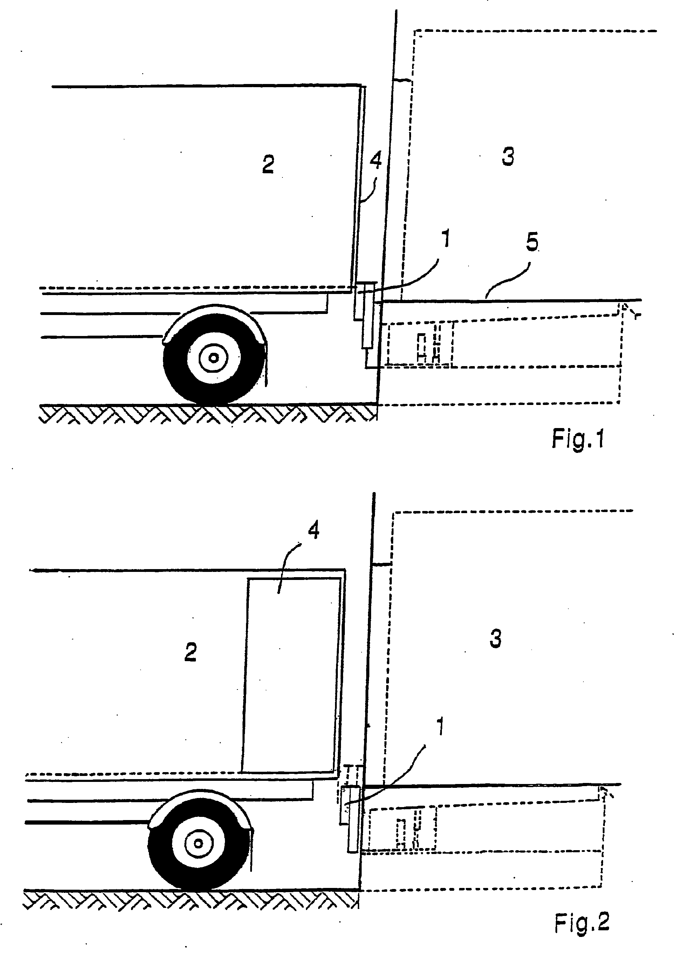

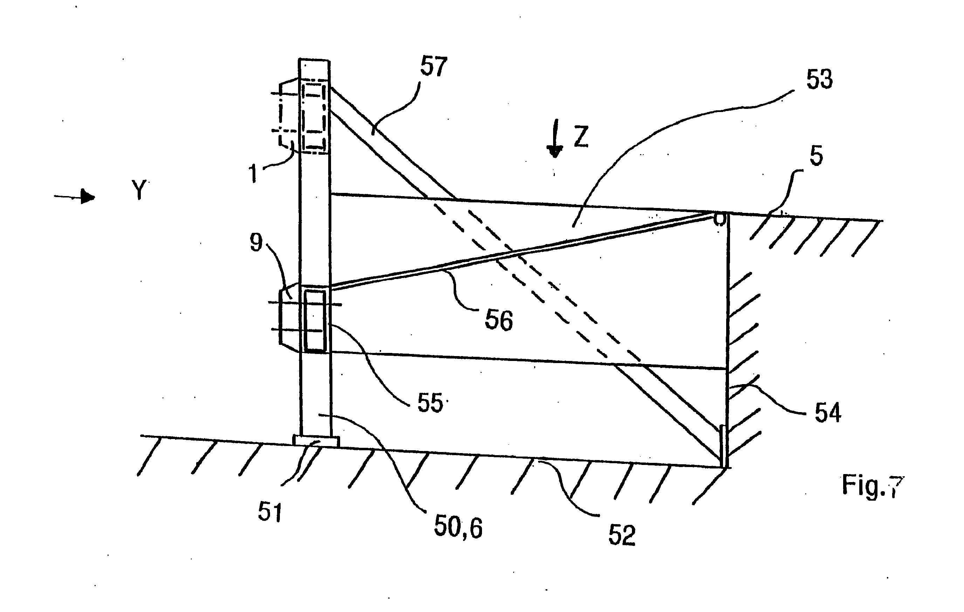

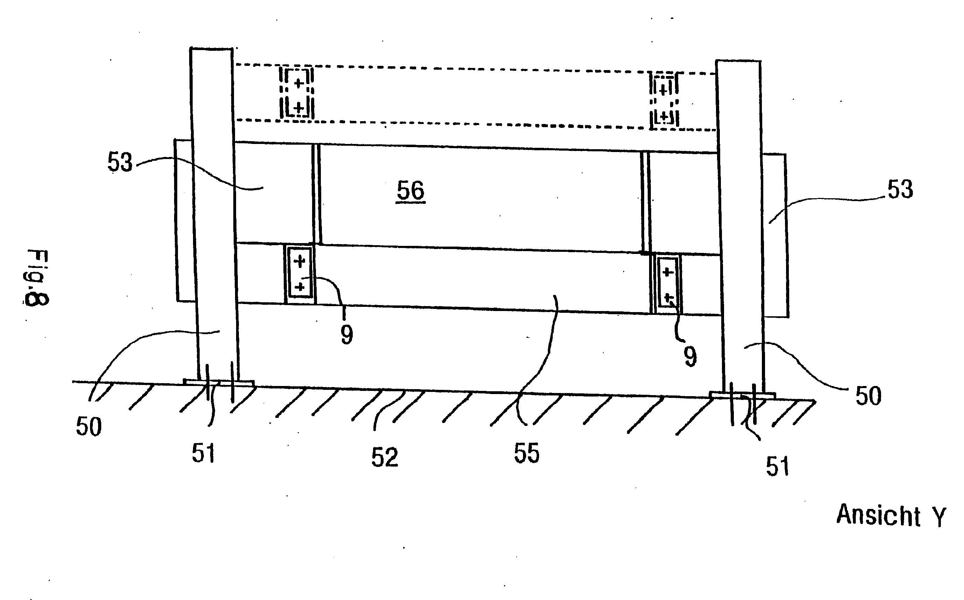

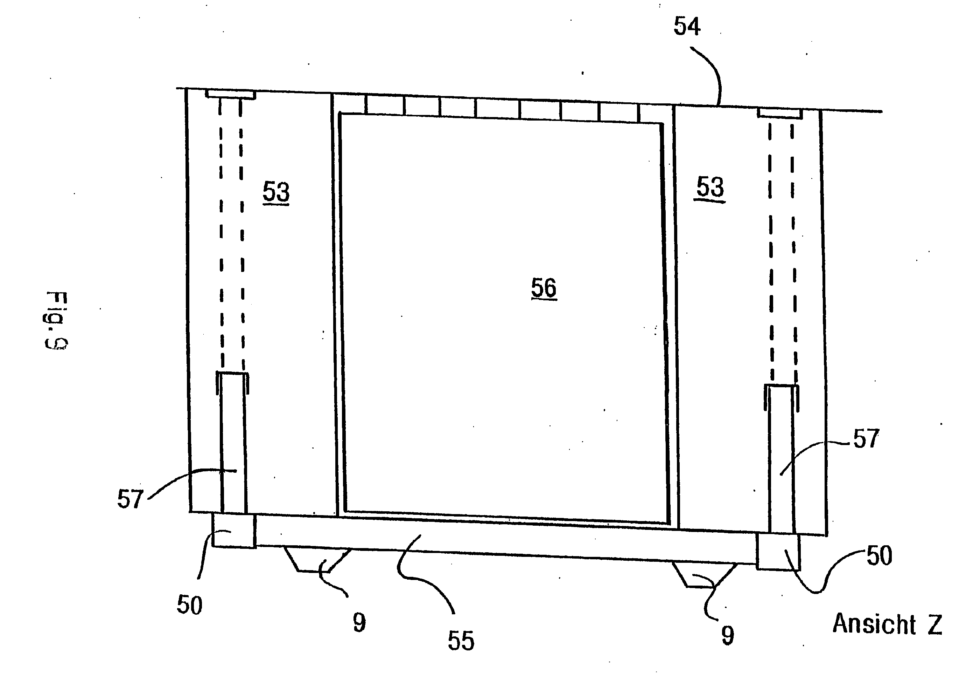

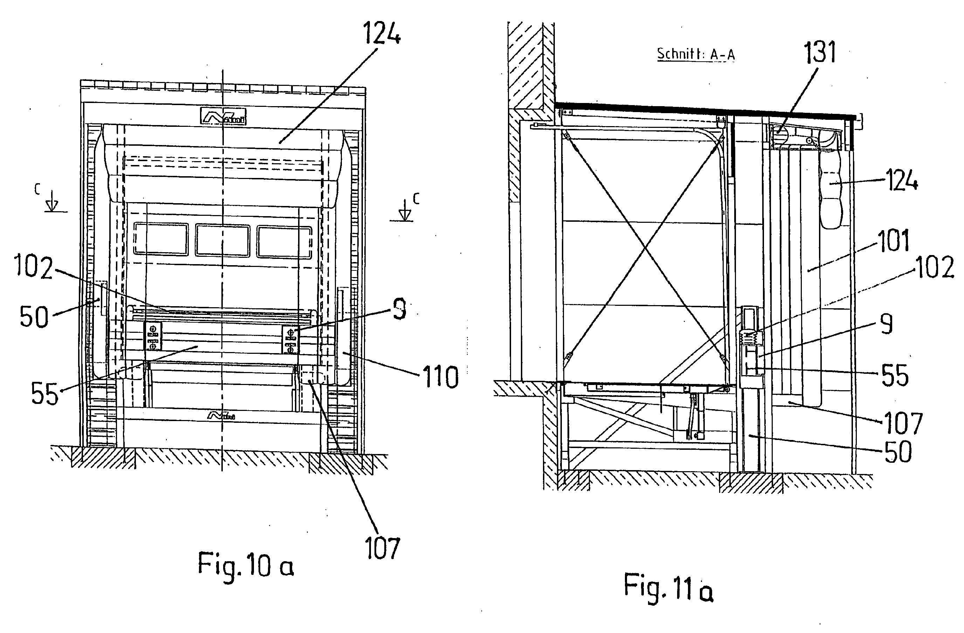

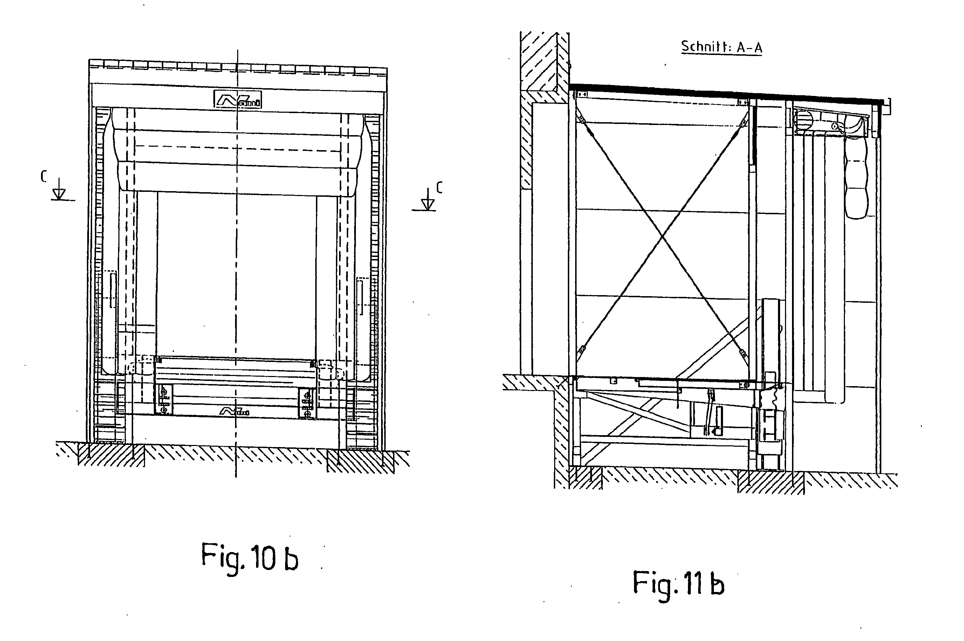

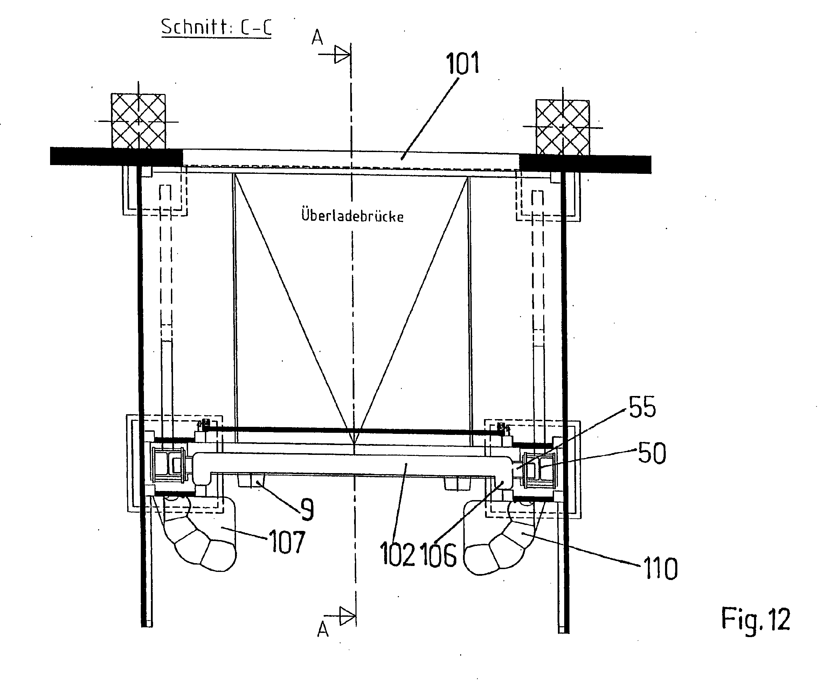

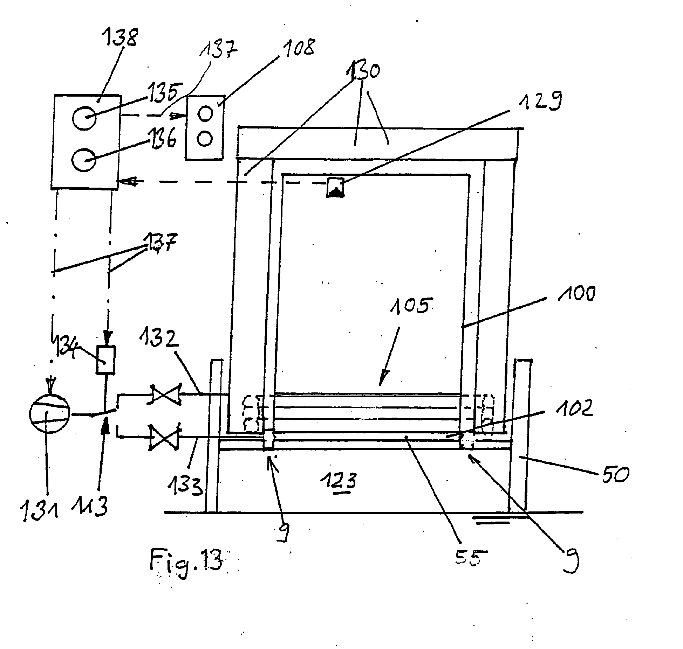

Figur 7 einen Vertikalschnitt durch eine alternative Ausgestaltung mit einem an Stützen geführten Rammbalken, Figur 8 eine frontale Ansicht der Ausgestaltung gemäss Figur 9, Figur 9 eine Aufsicht auf die Ausgestaltung gemäss Figur 8, Figur 10 eine frontale Ansicht einer vor die Gebäudeöffnung gesetzten Schleuse, jeweils in Ruhe-oder Betriebsstellung Figur 11 die Schleuse gemäss Figur 10 in einem Vertikalschnitt, jeweils in Ruhe oder Betriebsstellung Figur 12 die Schleuse gemäss Figur 10 als horizontaler Schnitt und Figur 13 eine schematische Darstellung der Gebläseluftführung zum erfindungsgemässen Dichtungsteil In den Figuren 1 und 2 bezeichnet 1 den erfindungsgemässen Anfahrschutz, der zwischen einem LKW 2 und einem Gebäude 3 angeordnet ist. Die Figur 1 zeigt dabei eine Situation, in der der LKW mit geschlossenen Türen 4 zunächst an den Anfahrschutz 1 herangefahren ist. Die obere Kante des Anfahrpuffers ist dabei so positioniert, dass sie über das Niveau der Rampenkante 5 hinausragt. Der Anfahrschutz hat dabei eine Höhe, die ausreicht, dass die Aufbauten des LKW gegen den Puffer gefahren werden können. Zum Öffnen der Türen 4 ist der Puffer jedoch im Wege. Deshalb wird der Anfahrschutz dann aus der Schutzposition gemäss Figur 1 in die Betriebsposition gefahren, die in Figur 2 dargestellt ist. In dieser Lage kollidiert der Anfahrschutz nicht mehr mit den zu öffnenden Türen.

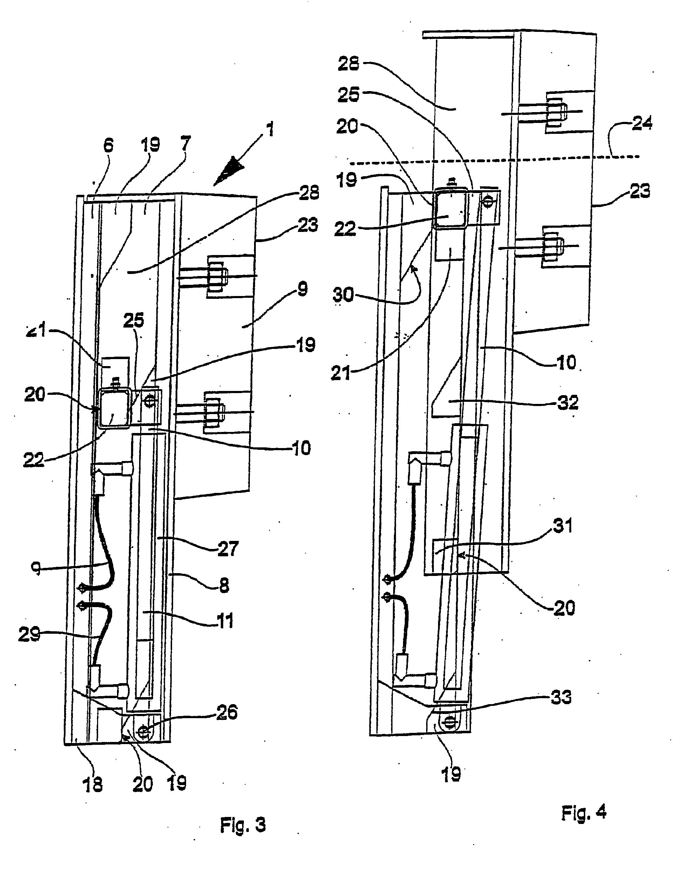

Die Konstruktion des erfindungsgemässen Schutzes ist in Figur 3 als Vertikalschnitt dargestellt. Der Anfahrpuffer 1 besteht im wesentlichen aus einer ortsfesten. Baugruppe 6 und einer beweglichen Baugruppe 7.

Zur beweglichen Baugruppe gehört ein Pufferblock 8, an dem das Anfahrkissen 9 angebracht ist. An dem Pufferblock 8 ist zur Bewegung desselben die Kolbenstange 10 eines Kolben-Zylinder-Antriebs 11 mittels einer Verbindung 25 schwenkbar befestigt. Dieser Stellantrieb 11 stützt sich auf der anderen Seite über das Schwenklager 26 des Zylinders 27 an dem Montagerahmen 18 ab, mit dem der Stellantrieb 11 schwenkbar verbunden ist, die die feststehende Baugruppe 6 bilden.

Zur Führung der Verstellbewegung ist am Montagerahmen 18 eine Führungsschablone 19 angeschweisst, die aus mehreren einzelnen Elementen besteht. Die Schablone 19 führt ein Mitnahmeelement 22, dass in die Mitnahmeöffnung 21 einer am Pufferblock 8 angeschweissten Platte 28 eingreift. Das Mitnahmeelement 22 wird über die Verbindung 25 von der Kolbenstange 10 bewegt.

Um aus der in Figur 3 dargestellten Positionen in die Anfahrt-Positionen gemäss Figur 4 zu fahren, wird der Zylinder 27 zunächst über die Hydraulikschläuche 29 mit hydraulischer Flüssigkeit gespeist. Die Kolbenstange 10 fährt darauf aus und bewegt über Verbindung 25 das Mitnahmeelement in der Mitnahmeöffnung 21 solange in vertikale Richtung, bis das Mitnahmeelement 22 an der oberen Kante der Mitnahmeöffnung 21 anliegt. Erst dann bewegt sich auch der Pufferblock 8 zunächst vertikal nach oben, bis das Mitnahmeelement auf die Schräge 30 der Führungschablone 19 trifft. Die Schablone 19 drängt das Mitnahmeelement nach aussen, bis die Kolbenstange 10 ihre obere Endlage erreicht hat. In dieser Endlage stützt sich das Mitnahmeelement 22 auf der Stützfläche 20 der Schablone 19 ab.

Da die Mittelachse 24 der Stossfläche 23 oberhalb des Mitnahmeelementes 22 angeordnet ist, wird auf den Pufferblock 8 bei einem Stoss in Richtung der Mittelachse 24 ein Moment um die Achse des

Mitnahmeelementes 22 ausgeübt. Um diese Kräfte aufzunehmen, ist an dem Pufferblock 8 eine Drehmomentstütze 31 vorgesehen, die sich an eine vertikal von der oben beschriebenen Stützfläche.20 beanstandeten weiteren Stützfläche 20 anlegt.

Das Einfahren des Anfahrpuffers aus der in Figur 4 dargestellten Positionen in die gemäss Figur 3 gezeigten Lage erfolgt analog. Zunächst bewegt sich wiederum das Mitnahmeelement 22 innerhalb der Mitnahmeöffnung 21. Erst dann bewegt sich auch der Pufferblock 8 vertikal nach unten. Sobald das Mitnahmeelement 22 auf die Schräge 32 und die Drehmomentstütze 31 auf die Schräge 33 stösst, wird der Pufferblock 8 den Schrägen 32 und 33 folgend wieder in Richtung auf den Montagerahmen 18 gedrängt, bis die in Figur 3 gezeigte Lage erreicht ist.

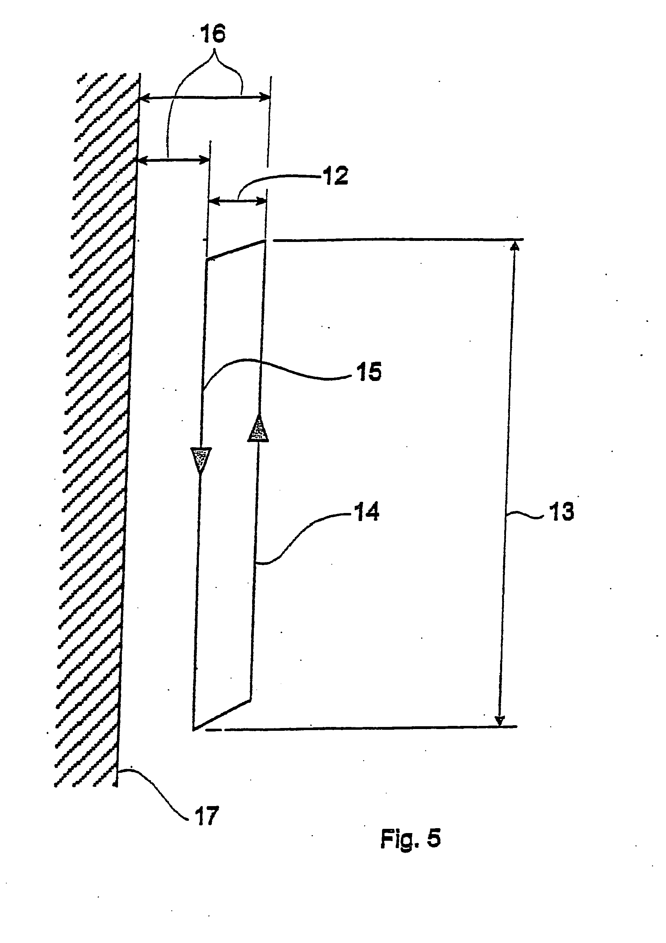

In Figur 5 ist der Verstellweg aus der Seitenansicht noch einmal anschaulich dargestellt. Der aufwärts gerichtete Verstellweg 14 weist einen grösseren Abstand 16 zur Montageebene 17 des Anfahrpuffers auf, als der abwärts gerichtete Verstellweg 15. Die horizontale Stellwegkomponente 12 ist aber wesentlich geringer als die vertikale Stellwegkomponente 13. Der Verstellweg kann je nach Erzeugungsweise der horizontalen Wegkomponente etwas unterschiedlich gestaltet sein.

Alternative Antriebskonzepte sind weiter unten beschrieben.

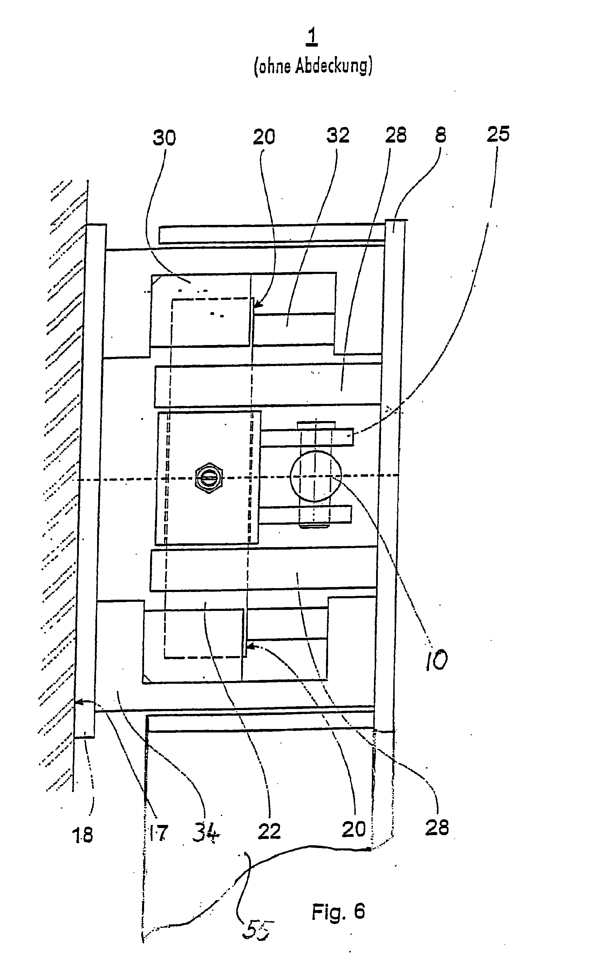

Eine Aufsicht auf den erfindungsgemässen Anfahrpuffer ist in Figur 6 in seiner unteren Lage dargestellt. In dieser Lage stützt sich der Pufferblock 8 über die U-förmigen Seitenteile 34 und den Montagerahmen 18 auf der Montageebene 17 ab. In der oberen Lage des Anfahrschutzes 1 stützt sich der Pufferblock 8 über die Platte 28 und das Mitnahmeelementes 22 auf der Stützfläche 20 ab. Die Pufferblöcke 8 sind mit einem Rammbalken 55 fest verbunden, auf dem im geeigneten Abstand Anfahrkissen angebracht sind.

In Figur 7,8 und 9 ist eine bevorzugte Ausgestaltung als Vertikalschnitt, Frontansicht und Aufsicht dargestellt. Zur Trennung der Ladebucht vom Gebäude, beispielsweise bei einem Kühlhaus, ist eine bekannte Überladebrücke 56 in einem Podest 53 eingebaut. In der Ruhelage ist die Überladebrücke nach unten geneigt eingestellt. Das Podest 53 kann man sich auch von einer nicht dargestellten Thermoschleuse umbaut denken, wie sie in den Figuren 10 bis 12 gezeigt ist. Ein der Übersichtlichkeit wegen ebenfalls nicht dargestelltes Rolltor kann dabei bis auf die Überladebrücke abgesenkt sein. Zum Schutze des Tores, der Überladebrücke und/oder des Podestes 53 ist vor dem Podest zwischen zwei Stützen 50 ein Rammbalken 55 angeordnet, auf dem zwei Anfahrkissen 9 befestigt sind. Die Anfahrkissen 9 sind so auf dem höhenverstellbaren Rammbalken 55 angeordnet, dass sie sich seitlich der Überladebrücke befinden. Der Rammbalken 55 selbst ist mit seinen Enden in bzw. an den Säulen 50, z. B. auf die weiter oben beschriebene Weise, höhenverstellbar gelagert.

Die Säulen haben einen Abstand, der vorzugsweise das Doppelte der LKW-Breite beträgt. Die Säule 50 ist mittels eines Flansches als Fuss 51 mit einem in der Verkehrsfläche 52 vorgesehenen Fundamt verschraubt. Zusätzlich wird das obere Ende der Säule nach hinten von einem schräg nach unten verlaufenden Stützbalken 57 gegen die Gebäudewand 54 oder auf dem Niveau der Verkehrsfläche abgestützt. Die beim Anfahren der Konstruktion auftretenden Anfahrkräfte können so getrennt vom Podest oder von der Gebäudekonstruktion in eine geeignete Fundamentierung geleitet werden.

Üblicherweise steht der Rammbalken beim Andocken eines LKW in seiner oberen Ruhelage. Die Überladebrücke ist dann in ihrer unteren Ruhelage.

In dieser Lage bildet der Rammbalken eine Absturzsicherung für auf der Überladebrücke befindliche Ladegeräte wie Gabelstapler. Anschliessend wird das Tor geöffnet und der Rammbalken in seine untere Position gefahren. Die LKW-Tür kann dann ohne störenden Anfahrschutz geöffnet werden sowie die Plattform der Überladebrücke angehoben und auf die Ladefläche des LKW aufgelegt werden. Sollte die Überladebrücke die gesamte Breite eines LKW überspannen, so verhindert der durchgehende und breiter als die Gesamtbreite des LKW ausgebildete Rammbalken eine Beschädigung der Überladebrücke.

Aus den in den Figuren 11 und 12 dargestellten Ansichten, der Vorderansicht, einem Vertikalschnitt und einem Horizontalschnitt einer Thermoschleuse, ist erkennbar, dass die sonst systembedingten vertikalen und horizontalen Querschnitte der Öffnung zwischen der Brückenplatte 116 bzw. dem Gebäude und dem Fahrzeug durch die erfindungsgemässe Dichtung in Kombination mit dem Anfahrschutz wesentlich verringern lassen bzw. diese Öffnung vollkommen schliessen.

In Figur 11, die einen Vertikalschnitt durch die Thermoschleuse darstellt, ist deutlich der liegend eingebaute IPB-Träger erkennbar, der als Rammbalken 55 dient. Darauf ist das aufblasbare Dichtungsteil 102 angeordnet. In dieser oberen Schutzposition des Rammbalkens ist das Dichtungsteil 102 zusammengefallen, das durch ein nicht dargestelltes eigenes Gebläse in der unteren Stellung des Rammbalkens 55 dann in seine zur Oberladebrücke dichtende Position gefahren wird. Die seitlich und oberhalb der Gebäudeöffnung angeordneten aufblasbaren Dichtungen 124 und 110 werden vom Gebläse 131 versorgt.

In Figur 12 ist die Dichtungssituation in einem Horizontalschnitt als Detail dargestellt. =Deutlich erkennbar ist, wie beispielsweise das erfindungsgemässe aufblasbare Dichtungsteil 102 an den Enden freie Schenkel 106 aufweist, die in Richtung eines dreieckförmigen Teils 107 des seitlich aufblasbaren Dichtungsteils 110 weisen.

In Figur 13 ist schematisch die Luftversorgung des Dichtungsteils dargestellt. Um die Gebäudeöffnung 101 sind seitlich und oberhalb der Gebäudeöffnung 100 bekannte aufblasbare Wulstdichtungen 130 vorgesehen. Diese Wulstdichtungen 130 werden von einem Gebläse 131 über eine Luftversorgungsleitung 132 vom Gebläse mit Luft entsprechenden Drucks beaufschlagt. Sie legen sich dadurch an das Profil eines herangefahrenen LKW an. Zusätzlich ist das aufblasbare Dichtungsteil 102 oberhalb des Rammbalkens 55 gezeigt, das durch eine zweite Luftversorgungsleitung 133 gespeist wird.

Mittels einer Umschaltklappe 113 kann wahlweise die Luftversorgung der Wulstdichtung 130 oder über Leitung 133 das aufblasbare Dichtungsteil 102 vom Gebläse 131 versorgt werden.

Selbstverständlich können alternativ auch zwei Gebläse vorgesehen werden, die den einzelnen Dichtungen zugeordnet sind. Eine Steuerung 138, die zum Ansteuern der Überladebrücke vorgesehen ist, hat zusätzlich geeignete Ausgänge und Wirkverbindungen 137, um das Gebläse 131 oder alternativ den Antrieb 134 der Umschaltklappe 113 in Betrieb zu setzen oder ggf. eine Ampel 108 zu schalten, die mit rotem oder grünem Signal der Betriebszustand dem Fahrer eines LKW anzeigt.

lst beispielsweise ein LKW an die Öffnung 100 herangefahren, so wird der Taster 135 von einer Bedienperson gedrückt, um den Befehl zum Heben der Brücke durch die Steuerung zu erteilen. Um wirksam zu werden, muss der Sensor 129 zunächst den angedockten LKW erkannt haben. Die Steuerung fährt dann den Rammbalken 55 in seine untere Ruhelage, erst dann schwenkt die Steuerung die Überladebrücke in ihre obere Position und fährt die Verlängerung aus. Nach Erreichen des ausgefahrenen Zustandes oder nach Loslassen des Tasters 135 wird die Verlängerung auf die Ladefläche des LKW abgesenkt. Gleichzeitig wird ein Zeitzähler in Gang gesetzt, der nach Ablauf von beispielsweise 10 Sekunden dann über die Wirkverbindung 137 das Gebläse 131 in Betrieb setzt, um die Wulstdichtungen bzw. je nach Stellung der Umschaltklappe das Dichtelement 102 aufzublasen.

Wird nach Beendigung des Ladevorgangs der Taster 136 von einer Person gedrückt, um den Befehl zur Rückkehr in die Ruhelage der Überladebrücke zu erteilen, so wird gleichzeitig wieder ein Zähler in Gang gesetzt, der den Befehl für die Brücke erst nach Ablauf von beispielsweise 10 Sekunden gibt. Mit den Drücken des Tasters 136 wird aber sofort das Gebläse 131 still gesetzt, so dass die Dichtungsteile in sich zusammenfallen, bevor die Überladebrücke in ihre Ruhelage zurückkehrt.

Anschliessend wird, sofern der Sensor 129 keinen LKW mehr erkennt, der Rammbalken 55 in seine obere Schutzposition gefahren und nach Erreichen dieser Lage die Ampel 108 auf grün gestellt.

Auf diese Weise ist ein sehr effizienter und betriebssicherer Anfahrschutz mit einer Dichtung geschaffen worden, bei dem die verbliebenen Öffnungen zwischen LKW und Gebäude zuverlässig in bisher unerreichbarer Weise abgedichtet sind.

### BEZUGSZEICHENLISTE

1. Anfahrschutz
2. LKW
3. Gebäude
4. Tür
5. Rampenkante
6. feste Baugruppe
7. bewegliche Baugruppe
8. Pufferblock
9. Anfahrkissen
10. Kolbenstange
11. Kolben-Zylinder-Antrieb
12. horizontale Stellwegkomponente
13. vertikale Stellwegkomponente
14. aufwärts gerichteter Verstellweg
15. abwärts gerichteter Verstellweg
16. Abstand
17. Montageebene
18. Montagerahmen
19. Führungsschablone
20. Stützfläche
21. Mitnahmeöffnung
22. Mitnahmeelement
23. Stossfläche
24. Mittelachse
25. Verbindung
26. Schwenklage
27. Zylinder
28. Platte
29. Hydraulikschlauch
30. Schräge
31. Drehmomentstütze
32. Schräge
33. Schräge
34. Seitenteil
37. obere Endlage
38. zweiter Kolben-Zylinder-Antrieb
39. Auffahrkeilkombination
42. Feder
43. Linearführung
44. Langloch
50. Säule
51. Fuss
52. Verkehrsfläche
53. Podest
54. Gebäudewand
55. Rammbalken
56. Überladebrücke
57. Stützbalken
101. Gebäudeöffnung
102. Dichtelement
105. Überladebrücke
106. freier Schenkel
107. dreieckförmiges Dichtteil
108. Ampel
109.
110. aufblasbares Dichtungsteil
113. Umschaltklappe
116. Brückenplatte
117. Verkehrsfläche
118. Gebäudewand
119. Schwenkachse
120. Verlängerung
122. freie Schenkel
123. Tasche
124. oberster Wulst
129. Sensor
130. Wulstdichtungen
131. Gebläse
132. Luftversorgungsleitung
133. Luftversorgungsleitung
134. Antrieb
135. Taster Heben
136. Taster Rückkehr
137. Wirkverbindung
138. Steuerung

## Patentansprüche

1. Verfahren zum Betrieb eines Anfahrschutzes (1) bestehend aus einem ortsfestem Montagerahmen (18) und einem höhenverstellbaren Pufferblock (8) für eine Verladerampe oder eine Überladebrücke (56, 105) insbesondere zum Schutz von Fassaden beim Andocken von Fahrzeugen an Gebäudeöffnungen, (101) mit mindestens einem Dichtelement (102) **dadurch gekennzeichnet, dass** ein Startsignal für das untere Dichtelement (102) zum Anfahren der Dichtposition von einer Steuerung erzeugt wird, vorzugsweise der Überladebrückensteuerung (13), erst wenn die Betriebsposition der Überladebrücke (56, 105) erreicht ist, insbesondere nach Ablauf einer Zeitspanne, und wobei der Anfahrschutz (1) erst nach einem Andocken eines LKW (2) an die Gebäudeöffnung (101) aus einer Ruhelage in eine untere Endlage gefahren wird, und der Anfahrschutz (1) selbsttätig in seine obere Schutzlage fährt, sobald der LKW (2) sich nicht mehr in der Andockposition befindet und/oder die Überladebrücke (56, 105) ihre Ruhelage erreicht hat.

2. Verfahren nach Anspruch 1, **dadurch gekennzeichnet, dass** von der Überladebrückesteuerung (13) nach Betätigen eines Befehles zur Rückkehr der Überladebrücke (56,105) in ihre Ruhelage zuerst das Signal zum Rückfahren des unteren Dichtelements (102) in die Ruhelage und dann die Überladebrücke (56, 105) erst nach Ablauf einer für ein Zusammenfallen des unteren Dichtelements (102) ausreichenden Zeitspanne in ihre Ruhelage zurückkehrt, wobei vorzugsweise das Rückfahren des unteren Dichtelements (102) in die Ruhelage durch Umkehrung eines Gebläses (131) erfolgt.

## Claims

1. A method for operating a crash protection device (1) comprising
a stationary mounting frame (18) and
a height-adjustable buffer block (8)
for a loading ramp or a loading bridge (56, 105), in particular for protecting building fronts when vehicles are being docked at building openings (101), and having at least one sealing element (102), **characterized in that** a starting signal for a lower sealing element (102) to assume a sealing position is generated by a controller, preferably a loading bridge controller (13), not until the operating position of said loading bridge (56, 105) has been reached, in particular not until a time has elapsed, and wherein said crash protection device (1) is moved from a rest position to a lower end position not until a lorry (2) has been docked at said building opening (101), and said crash protection device (1) automatically assumes an upper protection position, as soon as said lorry (2) has left the docking position and/or said loading bridge has reached its rest position.

2. A method according to claim 1, **characterized in that** said loading bridge controller (13), after operating a command to return said loading bridge (56, 105) to its rest position, first generates a signal for returning said lower sealing element (102) to its rest position, and then said loading bridge (56, 105) returns to its rest position only after a time has elapsed which is sufficiently long for said lower sealing element (102) to deflate, wherein it is preferred to return said lower sealing element (102) to its rest position by inverting a fan (131).

## Revendications

1. Procédé destiné au fonctionnement d'une protection anti-tamponnement (1) consistant en un cadre de montage fixe (18) et un bloc butoir (8) réglable en hauteur pour une rampe de chargement ou un pont de transbordement (56, 105), destinée notamment à protéger les façades lors de la mise à quai de véhicules à des ouvertures de bâtiments (101), comportant au moins un élément d'étanchéité (102), **caractérisé en ce qu'**un signal déclenchant le déplacement de l'élément d'étanchéité inférieur (102) vers la position d'étanchement n'est généré par une commande, de préférence par la commande du pont de transbordement (13) que lorsque le pont de transbordement (56, 105) ait atteint sa position opérationnelle, ceci en particulier après l'écoulement d'un certain laps de temps, la protection anti-tamponnement (1) ne se déplaçant d'une position de repos vers une position finale inférieure que lorsqu'un camion (2) se trouve en contact avec l'ouverture du bâtiment (101) et la protection anti-tamponnement (1) se déplaçant automatiquement dans sa position de protection supérieure dès que le camion (2) ne se trouve plus en position de mise à quai et/ou que le pont de transbordement (56, 105) ait atteint sa position de repos.

2. Procédé selon la revendication 1, **caractérisé en ce que**, après avoir actionné une commande pour le retour du pont de transbordement (56, 105) dans sa position de repos, la commande du pont de transbordement (13) donne d'abord le signal pour le retour de l'élément d'étanchéité inférieur (102) dans sa position de repos, et le pont de transbordement (56, 105) ne retourne dans sa position de repos qu'après un laps de temps nécessaire au dégonflement de l'élément d'étanchéité inférieur (102), le retour de l'élément d'étanchéité inférieur (102) dans sa position de repos s'effectuant de préférence par l'inversion d'une soufflante (131).
